# EUROPEAN PATENT SPECIFICATION

(11) **EP 0 379 038 B1**
(45) Date of publication and mention of the grant of the patent: **18.12.1996**
(21) Application number: 90100384.8
(22) Date of filing: 09.01.1990
(51) Int. Cl.: H04N 7/24

(54) **Image signal decoding apparatus**
Vorrichtung zum Dekodieren von Bildsignalen
Dispositif de décodage de signaux vidéo

(30) Priority: 14.01.1989 JP 6498/89
(43) Date of publication of application: 25.07.1990
(73) Proprietor: CANON KABUSHIKI KAISHA, Tokyo (JP)
(72) Inventor: Ishii, Yoshiki, Yokohama-shi, Kanagawa-ken (JP)
(74) Representative: Tiedtke, Harro, Dipl.-Ing.

(56) References cited:
- EP-A- 0 255 289
- EP-A- 0 293 189
- WO-A-87/02210
- US-A- 4 575 756

## Description

### BACKGROUND OF THE INVENTION

### Field of the Invention

The present invention relates to an image signal decoding apparatus for decoding digital image signals.

### Related Background Art

As a coding method, there is known a DC separation vector quantization method by which image data are efficiently coded on a block unit basis. According to this method, with an image represented by image data being divided into a plurality of blocks, the distribution of levels of image data within a block concentrates near at the 0 level if the image data are subtracted by the mean value of the image data within the block. By positively using this fact, the image data with the mean value subtracted therefrom are vector-quantized, and the quantized data and mean value data are transmitted.

During the transmission of image data coded in accordance with the above-described coding method, if the information representative of the characteristic of a block, such as the mean value data of image data within the block, become deficient, it becomes impossible to decode the coded image data into original image data on the block unit basis. The image reproduced by using such deficient decoded image data becomes visually poor. It is therefore necessary to reduce the visual deterioration by performing, on the block unit basis, an interpolation of the image data of a block without the mean value data, with image data of another block.

If an inter-frame interpolation which uses image data of an image already transmitted, is used for an interpolation of image data of a block without the mean value data, with image data of another block on the block unit basis, the image at a still image area can be improved visually to a large extent. In order to decide if a block to be interpolated belongs to a still image area, the motion amount of an image represented by image data in a block capable of being decoded and near the first-mentioned block, is estimated. If it is judged that the block incapable of being decoded belongs to a still image area, the block incapable of being decoded is interpolated by means of the inter-frame interpolation. If the nearby block capable of being decoded is used in detecting a motion of an image represented by image data in a block, the image motion detection cannot be obtained until the nearby block capable of being decoded has been completely decoded. An immediate interpolation at that time is therefore not possible, leaving a disadvantage in decoding. Further, all the image data are required to be compared for the purpose of interpolation upon a mean value data deficiency, so that it is wasteful in that a long calculation time and a large number of calculation circuits become necessary.

Document WO-A-87/02210 discloses an image signal decoding apparatus according to the preamble of claim 1.

The DCT-spectrum used for interpolating the image information signal is calculated only for certain pixel areas and only when the error detection circuit has detected a defective block.

Thus, this apparatus requires to calculate a DCT spectrum and to compare the image data of selected blocks upon error detection so that a lot of calculations are required before the interpolation actually can be carried out.

Furthermore, the decoded signal is stored in an image memory before motion detection and interpolation is effected. Therefore, an additional image memory is required in order to perform interpolation.

Accordingly, the above drawbacks regarding complexity and required calculation time are also valid for this apparatus.

It is therefore an object of the present invention to provide an improved image signal decoding apparatus of a simple structure having a reduced interpolation time.

This object is achieved by an image signal decoding apparatus as claimed in claim 1.

Accordingly, in case of a detected block error, adaptive interpolation may simply be achieved by inhibiting data from being updated in the image memory or by updating the image data of a respective block using image data of an adjacent block.

### BRIEF DESCRIPTION OF THE DRAWING

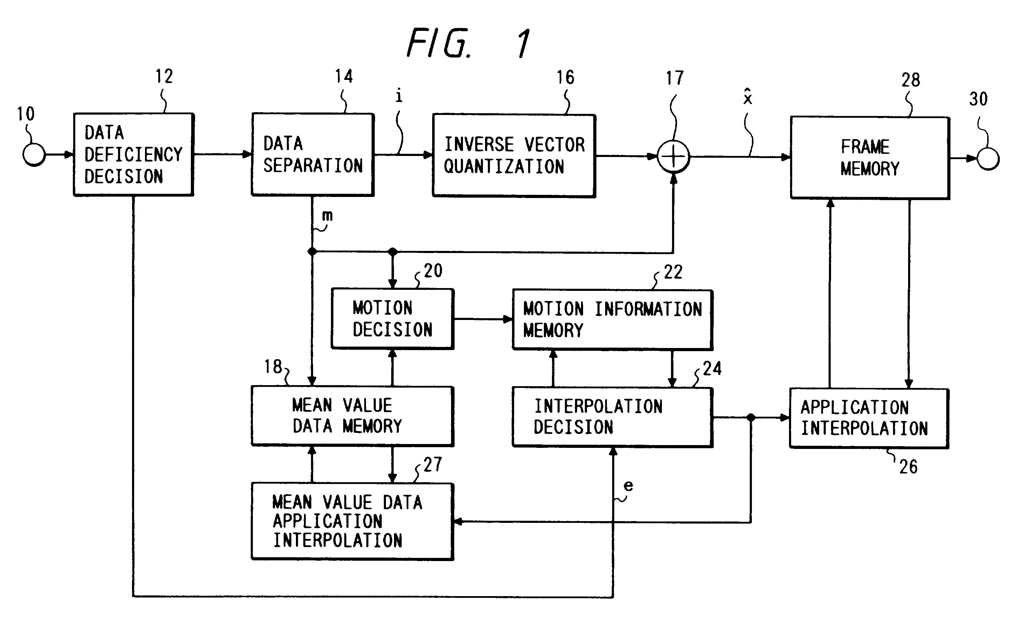

Fig. 1 is a block diagram showing the structure of a decoding apparatus embodying the present invention in an image data transmission system using a DC separation vector quantization method.

### DETAILED DESCRIPTION OF THE PREFERRED EMBODIMENT

The embodiment of the present invention will be described with reference to the accompanying drawings.

Fig. 1 is a block diagram showing the structure of a decoding apparatus embodying the present invention in an image data transmission system using a DC separation vector quantization method. Reference numeral 10 designates an input terminal for receiving transmission data supplied from a transmission line. Transmission data compressed by the DC separation vector quantization are inputted to the input terminal 10. A data deficiency decision circuit 12 decides a presence/absence of data deficiency in each data block of the transmission data. A data separation circuit 14 separates each data block of the transmission data into a mean value data m (block characteristic information) of image data and a vector quantized data i (image information in data block) obtained by quantizing the data obtained by subtracting the image data mean value m from the image data in a data block. An inverse vector quantization circuit 16 inversely quantizes the vector quantized data i. An addition circuit 17 adds together the data outputted from the inverse quantization circuit 16 and the image data mean value m of the data block outputted from the data separation circuit 14.

A mean value data memory 18 stores therein mean value data of one frame blocks. A motion decision circuit decides a presence/absence of an image motion of each block by comparing the presently supplied mean value data with the mean value data already stored in the mean value data memory 18. A motion information memory 22 stores therein a decision result obtained by the motion decision circuit 20. An interpolation decision circuit 24 decides an interpolation method by estimating a presence/absence of an image motion in a deficient block in accordance with image motion information on a nearby data block. An adaptive interpolation circuit 26 carries out an inter-frame interpolation for a block belonging to a still image area, and an intra-frame interpolation for a block belonging to a moving image area, respectively in accordance with a decision given by the interpolation decision circuit 24. A mean value data adaptive interpolation circuit 27 interpolates mean value data of the block with data deficiency in accordance with the interpolation method used by the adaptive interpolation circuit 26. A frame memory 28 stores therein decoded data from the addition circuit 17 and interpolated data from the adaptive interpolation circuit 26.

The operation of the decoding apparatus constructed as shown in Fig. 1 will be described. Transmission data inputted from the transmission line to the input terminal are supplied to the data deficiency circuit 12 which decides a presence/absence of data deficiency of each data block of the transmission data. If it is decided that there is a data deficiency, a deficient block signal e is supplied to the interpolation decision circuit 24. The data of a block decided by the data deficiency decision circuit 12 as no data deficiency are supplied to the data separation circuit 14 and separated into the mean value data m and vector quantized data i. The inverse vector quantization circuit 16 inversely quantizes the vector quantized data i. The addition circuit 17 adds together the inversely quantized data supplied from the inverse vector quantization circuit 16 and the mean value data m supplied from the data separation circuit 14, and outputs decoded image data.

The mean value data m outputted from the data separation circuit 14 are supplied also to the mean value data memory 18 and motion decision circuit 20. The motion decision circuit 20 compares the mean value data at the same block position before one frame stored in the mean value data memory 18, with the present mean value data supplied from the data separation circuit 14. The motion decision circuit 20 decides a presence/absence of an image motion in the block, e.g., by deciding if the difference between the mean values exceeds a predetermined threshold value. The decision result by the motion decision circuit 20 is expressed by using a predetermined number of bits which are stored in the motion information memory 22. The data stored in the mean value data memory 18 are updated each time mean value data for a new frame are inputted.

In the above processes, for a block without data deficiency, the decoded data are stored in the frame memory 28, and the data representative of motion information are stored in the motion information memory 22. In contrast, for a block with data deficiency, the interpolation decision circuit 24 refers to the data representative of motion information stored in the motion information memory 22 to thereby estimate the image motion information of the block with data deficiency in accordance with the motion information of a block near the block with data deficiency among those blocks whose data can be decoded. The estimation result is stored, as the image motion information of the block with data deficiency, in the motion information memory 22, and supplied to the adaptive interpolation circuit 26 and mean value data adaptive interpolation circuit 27.

The adaptive interpolation circuit 26 selects the inter-frame interpolation if the block to be interpolated belongs to the still image area, and the intra-frame interpolation if it belongs to the moving image area. The adaptive interpolation circuit 26 generates interpolation data by using the decoded image data stored in the frame memory 28, and stores the interpolation data in the frame memory 28. Since the image data before one frame are stored in the frame memory 28 at the position corresponding to the block without data deficiency, the inter-frame interpolation can be realized by inhibiting the data from being updated by the adaptive interpolation circuit 26. For the intra-frame interpolation, all the image data of a block with data deficiency are interpolated by using image data of a block near the block with data deficiency among those blocks which can be decoded.

The mean value data adaptive interpolation circuit 27 interpolates the mean value data of the block with data deficiency by using the same interpolation method to be used by the adaptive interpolation method, the interpolated mean value data being stored in the mean value data memory 18. Even if data deficiency occurs during two or more consecutive frames at the same block position, it is possible to decide an image motion by using the interpolated mean value data.

The decoding apparatus for decoding coded data which uses the DC separation vector quantization has been used in this embodiment for the description of the present invention. The invention is also applicable to an image transmission system wherein image information is represented, for the transmission thereof, by the data (block characteristic information) representative of the characteristic of a block such as mean value data, and the image data (image information in block) in a block such as vector quantization data. The block characteristic information may use, instead of the above-described mean value data, a minimum value data representative of the minimum value of levels of image data in a block, maximum value data representative of the maximum value, dynamic range data representative of a dynamic range, middle value data representative of a middle value, or the like, or a combination of these data. The image information in a block may use, instead of the above-described vector quantized data with the mean value subtracted therefrom, such as a data indicating to which level within the dynamic range of image data in a block, the image data with the minimum value data subtracted therefrom belongs. In this case, the block characteristic data may use the minimum value data and maximum value data, the minimum value data and dynamic range data, and the like. As the means for deciding an image motion in a block, it may take the arrangement that the maximum, minimum or dynamic range data are compared with the corresponding data before one frame to decide a presence/absence of an image motion in accordance with the comparison result. In this case, since the number of parameters for deciding an image motion increases, an image motion can be decided more precisely.

As readily understood from the foregoing description of the present invention, an image motion can be detected at once with a simple method, and an adaptive interpolation can be effected in accordance with the image motion information.

## Claims

1. An image signal decoding apparatus for decoding a transmitted image information signal divided into a plurality of blocks into an original image signal and storing said decoded image information signal in an image memory **(28)**, comprising:
a) decision means **(12)** for deciding if a block of said image information signal can be decoded or not;
b) motion decision means **(20)** for deciding if there is a motion in the present picture image represented by said block of said image information signal; and
c) interpolation means **(24, 26)** for interpolating the image information signal which relates to a block which was decided by said decision means **(12)** as being incapable of being decoded in accordance with the decision result provided by said motion decision means **(20)**,
**characterized in that**
d) said image information signal comprises a block characteristic information signal **(m)** and a coded information signal **(i)** on a block unit basis, said block characteristic information signal **(m)** representing a characteristic of the corresponding block and said coded information signal **(i)** being obtained by high-efficiency coding;
e) data separating means **(14)** for separating said block characteristic information from each block of said transmitted image information signal before storing said decoded image information signal representing said present picture image in said image memory **(28)**;
f) said motion decision means **(20)** is adapted to decide on the motion of the present block in accordance with a comparison result which is obtained by comparing the separated block characteristic information of the present block of the present picture image with the separated block characteristic information of a block at the same block position of a preceding picture image and, in case the block cannot be decoded, in accordance with the decision result of said motion decision means **(20)** of a block near the block which cannot be decoded;
g) said interpolating means **(24, 26)** is adapted to inhibit the updating of said image memory **(28)** with the decoded image information signal of the present block in case said motion decision means **(20)** decides that there is no motion in the present block, and otherwise uses the decoded image information signal relating to another block included in the same picture image as interpolation signal.

2. An image signal decoding apparatus according to claim 1,
**characterized by**
a block characteristic information memory **(18)** for storing and continuously updating the block characteristic informations (m) of an image frame.

3. An image signal decoding apparatus according to claim 2,
**characterized in that**
said motion decision means **(20)** includes motion decision information signal generating means for comparing said block characteristic information signal of a block newly received with said block characteristic information signal stored in said block characteristic information signal memory **(18)**, and in accordance with the comparison result, generating a motion decision information signal representing if there is a motion in an image represented by the image signals in a block.

4. An image signal decoding apparatus according to claim 3,
**characterized in that**
said motion decision means **(20)** further includes:
motion decision information signal storage means **(22)** for temporarily storing said motion decision information signal generated by said motion decision information signal generating means; and
storage control means for generating said motion decision information signal for the block decided by said decision means **(12)** as being capable of being decoded among those motion decision information signals stored in said motion decision information signal storage means **(22)**, and storing said generated motion decision information signal in said motion decision information signal storage means **(22)**.

5. An image signal decoding apparatus according to claim 3,
**characterized in that**
said motion decision means **(20)** further includes:
storage control means for generating said block characteristic information signal for the block decided by said decision means **(12)** as being incapable of being decoded into original image signals, by using said block characteristic information signal for a block decided as being capable of being decoded among those block characteristic information signals stored in said block characteristic information memory **(18)**, and storing said generated block characteristic information signal in said block characteristic information memory **(18)**.

6. An image signal decoding apparatus according to claim 1,
**characterized in that**
said block characteristic information signal is a mean value signal representative of the mean value of levels of a plurality of image signals constituting a block.

7. An image signal decoding apparatus according to claim 1,
**characterized in that**
said block characteristic information signal is a maximum value signal representative of the maximum value of levels of a plurality of image signals constituting a block.

8. An image signal decoding apparatus according to claim 1,
**characterized in that**
said block characteristic information signal is a minimum value signal representative of the minimum value of levels of a plurality of image signals constituting a block.

9. An image signal decoding apparatus according to claim 1,
**characterized in that**
said block characteristic information signal is a dynamic range signal representative of the dynamic range of levels of a plurality of image signals constituting a block.

10. An image signal decoding apparatus according to claim 1,
**characterized in that**
said block characteristic information signal is a middle value signal representative of the middle value of levels of a plurality of image signals constituting a block.

## Patentansprüche

1. Bildsignaldecodiervorrichtung zum Decodieren eines in eine Vielzahl von Blöcken aufgeteilten, übertragenen Bildinformationssignals in ein ursprüngliches Bildsignal und zum Speichern des decodierten Bildinformationssignal in einem Bildspeicher (28), mit:
a) einer Entscheidungseinrichtung (12) zum Entscheiden, ob ein Block des Bildinformationssignals decodiert werden kann oder nicht;
b) einer Bewegungsentscheidungseinrichtung (20) zum Entscheiden, ob in dem durch den Block des Bildinformationssignals dargestellten vorliegenden Bild eine Bewegung stattfindet; und
c) einer Interpolationseinrichtung (24, 26) zum Interpolieren des Bildinformationssignals, das zu einem Block gehört, der durch die Entscheidungseinrichtung (12) in Abhängigkeit des durch die Bewegungsentscheidungseinrichtung (20) bereitgestellten Entscheidungsergebnisses als nichtcodierbar unterschieden wurde,
**dadurch gekennzeichnet, daß**
d) das Bildinformationssignal ein Blockcharakteristikinformationssignal (m) und ein codiertes Informationssignal (i) auf einer Blockeinheitsbasis aufweist, wobei das Blockcharakteristikinformationssignal (m) eine Charakteristik des entsprechenden Blocks darstellt und das codierte Informationssignal (i) durch eine Hocheffizienzcodierung erhalten wird;
e) eine Datentrenneinrichtung (14) zum Trennen der blockcharakteristischen Information von jedem Block des übertragenen Bildinformationssignals vor dem Speichern des das vorliegende Bild in dem Bildspeicher (28) darstellenden decodierten Bildinformationssignals;
f) die Bewegungsentscheidungseinrichtung (20) über die Bewegung des vorliegenden Blocks entsprechend einem Vergleichsergebnis entscheidet, das durch Vergleichen der getrennten blockcharakteristischen Information des vorliegenden Blocks des vorliegenden Bilds mit der getrennten blockcharakteristischen Information eines Blocks an derselben Blockposition eines vorangehenden Bilds erhalten wird und, falls der Block nicht decodiert werden kann, entsprechend dem Entscheidungsergebnis der Bewegungsentscheidungseinrichtung (20) eines Blocks in der Nähe des nichtdecodierbaren Blocks;
g) die Interpolationseinrichtung (24, 26) das Fortschreiben des Bildspeichers (28) mit dem decodierten Bildinformationssignal des vorliegenden Blocks verhindert, falls die Bewegungsentscheidungseinrichtung (20) entscheidet, daß keine Bewegung in dem vorliegenden Block stattfindet, und anderenfalls das zu einem anderen in demselben Bild enthaltenen Block gehörige Bildinformationssignal als Interpolationssignal verwendet.

2. Bildsignaldecodiervorrichtung nach Anspruch 1,
**gekennzeichnet durch**
einen Blockcharakteristikinformationsspeicher (18) zum Speichern und andauernden Fortschreiben der blockcharakteristischen Informationen (m) eines Bildrahmens.

3. Bildsignaldecodiervorrichtung nach Anspruch 2,
**dadurch gekennzeichnet, daß**
die Bewegungsentscheidungseinrichtung (20) eine Bewegungsentscheidungsinformationssignalerzeugungseinrichtung enthält zum Vergleichen des Blockcharakteristikinformationssignals eines neu empfangenen Blocks mit dem in dem Blockcharakteristikinformationssignalspeicher (18) gespeicherten Blockcharakteristikinformationssignal, und zum Erzeugen eines Bewegungsentscheidungsinformationssignals, das entsprechend dem Vergleichsergebnis angibt, ob in einem durch die Bildsignale eines Blocks dargestellten Bild eine Bewegung stattfindet.

4. Bildsignaldecodiervorrichtung nach Anspruch 3,
**dadurch gekennzeichnet, daß**
die Bewegungsentscheidungseinrichtung (20) weiterhin umfasst: eine Bewegungsentscheidungsinformationssignalspeichereinrichtung (22) zum zeitweisen Speichern des durch die Bewegungsentscheidungsinformationssignalerzeugungseinrichtung erzeugten Bewegungsentscheidungsinformationssignals; und
einer Speichersteuereinrichtung zum Erzeugen des Bewegungsentscheidungsinformationssignals für den durch die Entscheidungseinrichtung (12) als decodierbar entschiedenen Block aus den in der Bewegungsentscheidungsinformationssignalspeichereinrichtung (22) gespeicherten Bewegungsentscheidungsinformationssignalen, und zum Speichern des erzeugten Bewegungsentscheidungsinformationssignals in der Bewegungsentscheidungsinformationssignalspeichereinrichtung (22).

5. Bildsignaldecodiervorrichtung nach Anspruch 3,
**dadurch gekennzeichnet, daß**
die Bewegungsentscheidungseinrichtung (20) weiterhin umfasst: eine Speichersteuereinrichtung zum Erzeugen des blockcharakteristischen Informationssignals für den durch die Entscheidungseinrichtung (12) als nicht in ursprüngliche Bildsignale decodierbar entschiedenen Block unter Verwendung des blockcharakteristischen Informationssignals eines als decodierbar entschiedenen Blocks aus den in dem Blockcharakteristikinformationsspeicher (18) gespeicherten blockcharakteristischen Informationssignalen, und zum Speichern des erzeugten blockcharakteristischen Informationssignals in dem Blockcharakteristikinformationsspeicher (18).

6. Bildsignaldecodiervorrichtung nach Anspruch 1,
**dadurch gekennzeichnet, daß**
das blockcharakteristische Informationssignal ein Mittelwertsignal ist, das den Mittelwert von Pegeln einer Vielzahl von einen Block bildenden Bildsignalen darstellt.

7. Bildsignaldecodiervorrichtung nach Anspruch 1,
**dadurch gekennzeichnet, daß**
das blockcharakteristische Informationssignal ein Maximalwertsignal ist, das den Maximalwert von Pegeln einer Vielzahl von einen Block bildenden Bildsignalen darstellt.

8. Bildsignaldecodiervorrichtung nach Anspruch 1,
**dadurch gekennzeichnet, daß**
das blockcharakteristische Informationssignal ein Minimalwertsignal ist, das den Minimalwert von Pegeln einer Vielzahl von einen Block bildenden Bildsignalen darstellt.

9. Bildsignaldecodiervorrichtung nach Anspruch 1,
**dadurch gekennzeichnet, daß**
das blockcharakteristische ein Dynamikbereichsignal ist, das den dynamischen Bereich von Pegeln einer Vielzahl von einen Block bildenden Bildsignalen darstellt.

10. Bildsignaldecodiervorrichtung nach Anspruch 1,
**dadurch gekennzeichnet, daß**
das blockcharakteristische Informationssignal ein Mittelwertsignal ist, das den Mittelwert von Pegeln einer Vielzahl von einen Block bildenden Bildsignalen darstellt.

## Revendications

1. Appareil de décodage de signaux d'images destiné à décoder un signal d'information d'image émis divisé en un ensemble de blocs, en un signal d'image original et à stocker ledit signal d'information d'image décodé dans une mémoire (28) d'image, comprenant :
a) des moyens (12) de décision pour décider si un bloc dudit signal d'information d'image peut être décodé ou non ;
b) des moyens (20) de décision de mouvement pour décider s'il se produit un mouvement dans l'image vidéo présente représentée par ledit bloc dudit signal d'information d'image ; et
c) des moyens (24, 26) d'interpolation pour interpoler le signal d'information d'image qui concerne un bloc pour lequel la décision prise par lesdits moyens (12) de décision indique qu'il ne peut pas être décodé en conformité avec le résultat de la décision fourni par lesdits moyens (20) de décision de mouvement,
caractérisé en ce que
d) ledit signal d'information d'image comprend un signal (m) d'information de caractéristique de bloc et un signal (i) d'information codée fourni bloc par bloc, ledit signal (m) d'information de caractéristique de bloc représentant une caractéristique du bloc correspondant et ledit signal (i) d'information codée étant obtenu par un codage à haute efficacité ;
e) des moyens (14) de séparation de données destinés à séparer ladite information de caractéristique de bloc de chaque bloc dudit signal d'information d'image transmis avant de stocker ledit signal d'information d'image décodé représentant ladite image vidéo présente dans ladite mémoire (28) d'image ;
f) lesdits moyens (20) de décision de mouvement sont conçus pour décider du mouvement du bloc présent selon un résultat de comparaison qui est obtenu par comparaison de l'information de caractéristique de bloc séparée du bloc présent de l'image vidéo présente, avec l'information de caractéristique de bloc séparée d'un bloc se situant à la même position de bloc qu'une image vidéo précédente, et, au cas où le bloc ne peut pas être décodé, selon le résultat de la décision fournie par lesdits moyens (20) de décision de mouvement d'un bloc proche du bloc qui ne peut pas être décodé ;
g) lesdits moyens (24, 26) d'interpolation sont conçus pour inhiber la mise à jour de ladite mémoire (28) d'image avec le signal d'information d'image décodé du bloc présent au cas où lesdits moyens (20) de décision de mouvement décident qu'il ne se produit pas de mouvement dans le bloc présent, et dans le cas contraire, utilisent le signal d'information d'image décodé lié à un autre bloc appartenant à la même image vidéo, en tant que signal d'interpolation.

2. Appareil de décodage de signal d'image selon la revendication 1, caractérisé par
une mémoire (18) d'information de caractéristique de bloc destinée à stocker et à mettre à jour en continu les informations (m) de caractéristiques de bloc d'une trame d'image.

3. Appareil de décodage de signaux d'images selon la revendication 2,
caractérisé en ce que
lesdits moyens (20) de décision de mouvement comportent des moyens générateurs de signal d'information de décision de mouvement destinés à comparer ledit signal d'information de caractéristique de bloc d'un bloc venant d'être reçu, avec ledit signal d'information de caractéristique de bloc stocké dans ladite mémoire (18) de signal d'information de caractéristique de bloc et, selon le résultat de la comparaison, à générer un signal d'information de décision de mouvement indiquant s'il se produit un mouvement dans une image représentée par les signaux d'images d'un bloc.

4. Appareil de décodage de signaux d'images selon la revendication 3,
caractérisé en ce que
lesdits moyens (20) de décision de mouvement comportent en outre : des moyens (22) de stockage de signal d'information de décision de mouvement destinés à stocker momentanément ledit signal d'information de décision de mouvement généré par lesdits moyens générateurs de signal d'information de décision de mouvement ; et
des moyens de commande de stockage destinés à générer ledit signal d'information de décision de mouvement pour le bloc pour lequel lesdits moyens (12) de décision ont décidé qu'il pouvait être décodé parmi les signaux d'information de décision de mouvement stockés dans lesdits moyens (22) de stockage de signal d'information de décision de mouvement, et à stocker ledit signal d'information de décision de mouvement généré dans lesdits moyens (22) de stockage de signal d'information de décision de mouvement.

5. Appareil de décodage de signaux d'images selon la revendication 3,
caractérisé en ce que
lesdits moyens (20) de décision de mouvement comportent en outre
des moyens de commande de stockage destinés à générer ledit signal d'information de caractéristique de bloc dans le cas du bloc pour lequel lesdits moyens (12) de décision ont décidé qu'il ne pouvait pas être décodé en des signaux d'image originaux, en utilisant ledit signal d'information de caractéristique de bloc dans le cas d'un bloc pour lequel la décision indique qu'il ne peut pas être décodé parmi les signaux d'information de caractéristique de bloc stockés dans ladite mémoire (18) d'information de caractéristique de bloc, et à stocker ledit signal d'information de caractéristique de bloc généré dans ladite mémoire (18) d'information de caractéristique de bloc.

6. Appareil de décodage de signaux d'images selon la revendication 1,
caractérisé en ce que
ledit signal d'information de caractéristique de bloc est un signal de valeur moyenne représentatif de la valeur moyenne des niveaux d'un ensemble de signaux d'images constituant un bloc.

7. Appareil de décodage de signaux d'images selon la revendication 1,
caractérisé en ce que
ledit signal d'information de caractéristique de bloc est un signal de valeur maximale représentatif de la valeur maximale des niveaux d'un ensemble de signaux d'images constituant un bloc.

8. Appareil de décodage de signaux d'images selon la revendication 1,
caractérisé en ce que
ledit signal d'information de caractéristique de bloc est un signal de valeur minimale représentatif de la valeur minimale des niveaux d'un ensemble de signaux d'images constituant un bloc.

9. Appareil de décodage de signal d'image selon la revendication 1,
caractérisé en ce que
ledit signal d'information de caractéristique de bloc est un signal de gamme dynamique représentatif de la gamme dynamique des niveaux d'un ensemble de signaux d'images constituant un bloc.

10. Appareil de décodage de signal d'image selon la revendication 1,
caractérisé en ce que
ledit signal d'information de caractéristique de bloc est un signal de valeur médiane représentatif de la valeur médiane des niveaux d'un ensemble de signaux d'images constituant un bloc.
